Europäisches Patentamt

European Patent Office

Office européen des brevets

(19)

(11) Publication number: **0 056 567**
**B1**

(12) **EUROPEAN PATENT SPECIFICATION**

(45) Date of publication of patent specification: **09.10.85**

(21) Application number: **81850245.2**

(22) Date of filing: **15.12.81**

(51) Int. Cl.⁴: **B 60 S 5/04, F 04 F 5/18,**
**B 60 C 23/00, F 17 C 5/06**

(54) **Inflating device.**

(30) Priority: **12.01.81 SE 8100129**

(43) Date of publication of application:
**28.07.82 Bulletin 82/30**

(45) Publication of the grant of the patent:
**09.10.85 Bulletin 85/41**

(84) Designated Contracting States:
**AT BE CH DE FR GB IT LI NL**

(56) References cited:
**EP-A-0 046 275**
**DE-C- 169 473**
**US-A-3 042 290**
**US-A-3 370 784**
**US-A-4 036 253**

(73) Proprietor: **Stumpp, Karl Heinz Peter**
**Liljestigen 21**
**S-125 32 Älvsjö (SE)**

(72) Inventor: **Stumpp, Karl Heinz Peter**
**Liljestigen 21**
**S-125 32 Älvsjö (SE)**

(74) Representative: **Omming, Allan**
**A. OMMING & CO. AB Sveavägen 28-30**
**S-111 34 Stockholm (SE)**

Courier Press, Leamington Spa, England.

## Description

The present invention relates to an inflating device of the kind disclosed in the preamble to the following claim 1.

Devices of this kind are already known for instance from the German patent specification 169 473. However, they have the drawback that they are large and clumsy, as well as being expensive, and thus they have not come into any great use. This is particularly the case with such inflators for bicycles, where carrying a voluminous inflating device about all the time is hardly to be reckoned with. In devices for inflating automobile tyres, and different kinds of inflatable objects, it is difficult to provide a sufficiently large quantity of compressed air and gas, if gas is permitted to leak slowly from a gas container connected to a gas pipe and a valve via a pipe joint under high pressure during a long storage time, as intended in above-mentioned German patent specification.

The object of the present invention is to provide an inflating device, which is small in size, cheap to manufacture and use, which may even so be made in a single size, if necessary, to cover most of the above-mentioned customarily prevailing applications.

In accordance with the invention, this has been achieved by the inflating device having been given the characterizing features disclosed in claim 1. By using a separate gas container or bulb as a high pressure chamber, suitably an ordinary carbon dioxide bulb, which may be bought almost anywhere, and which may be stored for an unlimited time in its sealed state without losing pressure, a higher pressure may be permitted in the chamber. Should the gas or air quantity remaining in the bulb be found insufficient in some particular case, the used bulb may be removed and a filled spare bulb inserted instead, such a bulb taking up an insignificant amount of space in storage.

The high pressure in such a cartridge is utilized by forming the discharge duct, in an inflating device in accordance with the invention, as an ejector means with side passages for the induction of secondary air into the discharge duct. For every part by volume or primary gas from the bulb, an addition of about 5 to 20 parts by volume of secondary air may thus be obtained. The quantity of secondary air does indeed taper off towards zero as the counter-pressure at the nozzle of the discharge duct increases, and to prevent a reduction in the highest pressure attainable, occurring when the primary gas starts to depart via the side passages, which pressure is determined by the pressure in the bulb at the time in question, these passages are provided with non-return valves, adopted for preventing leakage of gas through the side passages for a counter-pressure of the nozzle which exceeds a valve determined by the configuration of the ejector means.

The invention will now be described in the following in conjunction with the appended drawing, illustrating different embodiments thereof, and whereon

Figure 1 is a perspective view,

Figure 2 is a longitudinal section through a first embodiment of the device in accordance with the invention and

Figure 3 is a partial section through a second embodiment in accordance with the invention.

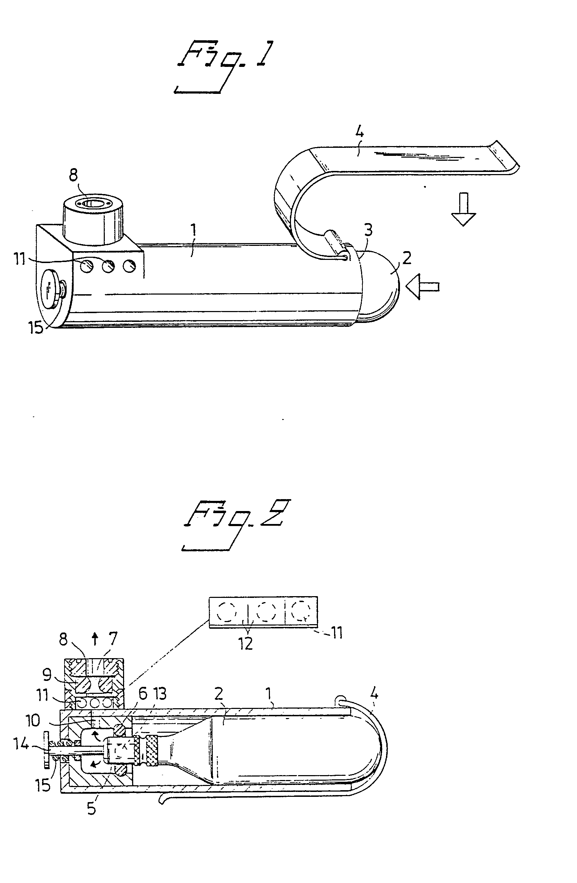

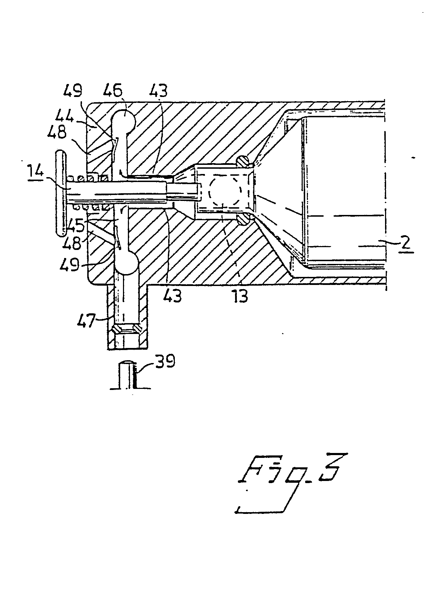

The embodiment illustrated of the inventive device in Figures 1 and 2 has a housing 1, in which a gas bulb 2 (an ordinary carbon dioxide bulb) is placed. At one end of the housing 1 there is an opening 3, through which the bulb is inserted and which is closed off by a hinged, J-shaped member 4. In the position illustrated in Figure 2, this member 4 retains the bulb 2 in its correct position with its neck 5 thrust into an O-ring 6, which seals the neck 5 so that the outlet of the bulb is in gas-tight communication with a discharge duct 7 arranged in the housing 1. The discharge duct 7 passes through a nozzle 8 having a packing 9, adapted to the valve (not shown) of a bicycle inner tube, for example. The discharge duct 7 also includes a constricted portion 10 which, together with side passages 11 to the outside of the housing, and the packing 9 or a valve (not shown) inserted from the outside into the packing form an ejector means.

For every part by volume of gas flowing from the bulb 2 to the duct 7, about 5 parts by volume of secondary air are initially inducted via the orifices 11. If the counter-pressure at the nozzle 8 increases to a value decided by the form of the ejector means, this induction ceases and a further pressure increase in the duct 7 is prevented by the gas from the bulb 2 being able to flow out via the side passages. If a higher pressure, up to the instantaneous pressure available from the bulb 2, is desired, it may be obtained easily by providing the side passages with simple non-return valves 12, which prevent gas from flowing out of the side passages. A conventional valve 13 inside the neck 5 of the bulb is operated by a push rod 14 displaceably mounted in the closed end of the housing 1, which may be depressed, against the bias of a spring 15, by the thumb or forefinger of the hand holding the device.

In the embodiment illustrated in Figure 3, a gas bulb of the same kind as that in Figures 1 and 2 is used, and its valve 13 is operated by a similar push rod 14 as in said Figures. As opposed to the embodiment according to Figures 1 and 2, a discharge duct 43 is arranged concentrically about the push rod 14 and normal to the end wall 44, where the duct merges into a radially directed, annular slit 45 opening out into an annular duct 46 provided with a radial discharge nozzle 47. At the juncture between slit 45 and duct 46 there are arranged substantially axial secondary air passages 48 extending through the end wall 44, and provided with non-return flaps 49 on the inside surface of the end wall. An ejector means is thus formed in this case as well, where the gas flow reaches the speed of sound on deflection at the end wall 44, and a heavy induction of secondary air via the passages 48 is obtained, whereat up to 20 parts by volume of air for one part by volume of gas flowing from the bulb may be obtained.

**Claims**

1. Device for inflating inflatable objects, for instance bicycle and car tyre inner tubes, including a housing (1) intended for holding and operating by one hand, which is provided with a discharge duct (7) connected to a high pressure gas container and opening out at a nozzle (8) via a hand operated valve device, the discharge duct (7) being formed as an ejector with side passages (11) provided with non-return valves arranged for letting in secondary air to said duct (7), characterized in that the housing (1) is formed with

a) an interior chamber adapted to receive the gas container which is formed as a gas bulb (2) having a neck portion, with a closed valve in said neck portion,

b) an opening (3) provided with a gas bulb retaining means (4) permitting the introduction of the gas bulb (2) and the retaining of said in said chamber in a position in which the neck portion of the bulb (2) extends into a ring-shaped sealing means (6) in said discharge duct (7) and

c) an operating rod (14) belonging to said valve device, which rod is in line with said ring-shaped sealing means (6) and the neck of said gas bulb (2), said rod being axially displaceable with respect to said neck portion against the action of a spring means (15) into a position with an end portion of the operating rod (14) extending into the neck portion adapted to open the valve (13) in said neck portion.

2. Inflating device as claimed in claim 1, characterized in that the valve (13) in the neck portion of said gas bulb (2) comprises a ball valve including a ball pressed by the gas pressure against a valve seat in the neck portion of said gas bulb.

**Revendications**

1. Dispositif de gonflage d'objets gonflables, par exemple les chambres à air d'une bicyclette ou des pneus d'une automobile, comprenant un boîtier (1) destiné à être tenu et actionné d'une main, qui comprend une conduite de décharge (7) reliée à un conteneur de gaz sous haute pression et s'ouvrant sur une buse (8) grâce à une valve manoeuvrée à la main, la conduite de sortie (7) ayant la forme d'un éjecteur avec des passages latéraux (11) équipés de clapets anti-retour disposés pour laisser passer l'air secondaire vers ladite conduite (7), caractérisé par le fait que le boîtier (1) est constitué

a) d'une chambre intérieure conçue pour recevoir la bouteille de gaz qui a la forme d'une cartouche de gaz (2) avec une partie goulot et une valve fermée dans ladite partie goulot,

b) une ouverture (3) équipée d'un dispositif de maintien de la cartouche de gaz (4) qui permet d'introduire la cartouche de gaz (2) et de la maintenir dans ladite chambre dans une position dans laquelle la partie goulot de la cartouche (2) s'étend dans des moyens d'étanchéité (6) en forme d'anneau de ladite conduite de sortie (7), et

c) d'une tige de fonctionnement (14) appartenant audit dispositif de valve, laquelle tige est alignée avec les moyens d'étanchéité (6) en forme d'anneau et avec le goulot de ladite cartouche de gaz (2), ladite tige étant mobile dans la direction axiale par rapport à la portion du goulot en s'opposant à l'action d'un ressort (15) jusque dans une position où une portion d'extrémité de la tige de fonctionnement (14) s'étend jusque dans la partie goulot adaptée pour ouvrir la valve (13) de cette partie goulot.

2. Dispositif de gonflage selon la revendication 1, caractérisé par le fait que la valve (13) placée dans la portion goulot de ladite cartouche de gaz (2) comprend une valve à bille comprenant une bille appuyée par la pression du gaz contre un siège de valve de la partie goulot de ladite cartouche de gaz.

**Patentansprüche**

1. Vorrichtung zum Aufblasen von aufblasbaren Gegenständen, z.B. Schläuchen von Fahrrädern und Kraftwagen, mit einem in einer Hand zu haltenden und betätigenden Gehäuse (1), das einen Auslaßkanal (7) aufweist, welcher mit einem Hochdruck-Gasbehälter in Verbindung steht und über eine handbetätigte Ventileinrichtung in einer Düse (8) mündet, wobei der Auslaßkanal (7) ausgebildet ist als Ejektor mit Seitendurchlässen (11), die mit Rückschlagventilen versehen sind und zum Einlaß von Nebenluft zum genannten Auslaßkanal (7) eingerichtet sind, dadurch gekennzeichnet, daß das Gehäuse (1) ausgebildet ist mit

a) einem Innenraum zur Aufnahme des Gasbehälters in Form einer Gaskapsel (2) mit einem Halsabschnitt und einem geschlossenen Ventil in diesem Halsabschnitt,

b) einer Öffnung (3), die eine Halteeinrichtung (4) für die Gaskapsel aufweist, und das Einsetzen der Gaskapsel (2) sowie das Halten derselben im genannten Innenraum in einer Position ermöglicht, in der der Halsabschnitt der Kapsel (2) in eine ringförmige Abdichtung (6) im Auslaßkanal (7) ragt, und

c) einem Betätigungsstift (14) der Ventileinrichtung, welcher mit der ringförmigen Abdichtung (6) und dem Hals der genannten Gaskapsel (2) fluchtet, wobei der genannte Stift entgegen der Wirkung einer Feder (15) bezüglich des genannten Halsabschnitts axial in eine Position verschieblich ist, in der ein Ende des Betätigungsstifts (14) in den Halsabschnitt zum Öffnen des Ventils (13) in diesem Halsabschnitt ragt.

2. Vorrichtung zum Aufblasen nach Anspruch 1, dadurch gekennzeichnet, daß das Ventil (13) im Halsabschnitt der genannten Gaskapsel (2) ein Kugelventil ist, dessen Kugel durch den Gasdruck gegen den Ventilsizt im Halsabschnitt der Gaskapsel gedrückt ist.

## Fig. 1

## Fig. 2

Fig.3

2